# EUROPEAN PATENT APPLICATION

(11) **EP 4 819 303 A1**
(43) Date of publication of application: **07.10.2026**
(21) Application number: 26156166.6
(22) Date of filing: 03.02.2026
(51) Int. Cl.: H01M 10/65

(54) **BATTERY COOLING STRUCTURE**

(30) Priority: 03.04.2025 JP 2025062010
(71) Applicant: Toyota Jidosha Kabushiki Kaisha, Toyota-shi, Aichi-ken 471-8571 (JP)
(72) Inventor: ASANUMA, Kentaro, TOYOTA-SHI, AICHI-KEN 471-8571 (JP)
(74) Representative: Cabinet Beau de Loménie

(57) **Abstract**

In a battery pack, a cooling circuit portion extends in a vehicle front-rear direction, and also includes an upstream channel portion that causes a coolant to flow from a cooler side that cools the coolant along a vehicle front-rear direction, and a downstream channel portion that branches off from the upstream channel portion into a plurality that extend in the vehicle front-rear direction, and also causes the coolant to flow to the cooler side along the vehicle front-rear direction.

## Description

### BACKGROUND OF THE INVENTION

### 1. Field of the Invention

The present invention relates to a battery cooling structure.

### 2. Description of Related Art

Japanese Unexamined Patent Application Publication No. 2024-92300 (JP 2024-92300 A) discloses an invention relating to a battery pack. In this battery pack, a cooler is disposed along a bottom portion of a battery case that supports battery cells, and this cooler cools the bottom portion of the battery case, which in turn cools battery modules accommodated in the battery case.

### SUMMARY OF THE INVENTION

Now, in the above related art, the cooler includes a channel, and the battery module is cooled by coolant flowing through this channel, but depending on the configuration of the channel, it is conceivable that evenly cooling the battery module may be difficult, and temperature differences may occur among the battery cells that make up the battery module.

In light of the foregoing, an object of the present disclosure is to provide a battery cooling structure that can suppress occurrence of temperature differences among battery cells that make up a battery module, when the battery module is cooled.

A battery cooling structure according to a first aspect includes a battery case that accommodates a battery module in which a plurality of battery cells is arrayed, a cooling circuit portion that is disposed along a bottom portion of the battery case, and that is also configured to cool the battery module, in which the cooling circuit portion includes an upstream channel portion that extends in an array direction of the battery cells, and that also causes coolant flowing through the cooling circuit portion from a cooler side that cools the coolant, to flow along the array direction, and a plurality of downstream channel portions that branches off from the upstream channel portion, extend in the array direction, and also cause the coolant to flow toward the cooler side along the array direction.

According to the battery cooling structure of the first aspect, the battery module in which the battery cells are arrayed is accommodated in the battery case, and the cooling circuit portion is disposed along the bottom portion of this battery case. Accordingly, in this aspect, the battery module can be cooled by causing the coolant to flow through the cooling circuit portion.

Now, depending on the configuration of the cooling circuit portion, evenly cooling the battery module may be difficult, and temperature differences may occur among the battery cells that make up the battery module.

Here, in this aspect, the cooling circuit portion extends in the array direction of the battery cells (hereinafter referred to as array direction) and also includes an upstream channel portion that causes the coolant from the cooler side that cools the coolant to flow along the array direction, and a downstream channel portion that branches off from the upstream channel portion into multiple that extend in the array direction and that also cause the coolant to flow along the array direction to the cooler side.

Accordingly, in this aspect, the speed at which the coolant cooled by the cooler is dispersed in the array direction is increased as compared to a configuration in which the coolant is moved back and forth through one channel each for the outbound path and for the inbound path, whereby the likelihood that the battery cells making up the battery module will be evenly cooled can be raised.

With the battery cooling structure of a second aspect, in the battery cooling structure of the first aspect, one each of the downstream channel portion is disposed on one side in an orthogonal direction that is orthogonal to the array direction, of the upstream channel portion, and on another side.

In the battery cooling structure according to the second aspect, the downstream channel portions are disposed one on one side of the upstream channel portion and one on the other side thereof, in the orthogonal direction that is orthogonal to the array direction. Accordingly, in the present embodiment, the flow rate of the coolant flowing through a pair of the downstream channel portions can be made to be flow rates that are approximately the same.

With the battery cooling structure of a third aspect, in the battery cooling structure of the first aspect or the second aspect, the upstream channel portion and the downstream channel portions are fashioned by joining pressed steel plates, and also a shape of a pair of the downstream channel portions is line-symmetrical with respect to the upstream channel portion.

According to the battery cooling structure of the third aspect, the upstream channel portion and the downstream channel portion are configured by joining pressed steel plates. The downstream channel portions are shaped symmetrically with respect to the upstream channel portion.

Accordingly, in this aspect, the shape of the press mold used to mold the downstream channel portion can be used in common, and also the likelihood that the coolant flowing from the upstream channel portion will be evenly distributed to one downstream channel portion and the other downstream channel portion can be increased.

With the battery cooling structure of a fourth aspect, the battery cooling structure of any one of the first aspect to the third aspect further includes a distribution channel portion that is continuous with a plurality of the upstream channel portions and also extends in a direction orthogonal to the array direction.

According to the battery cooling structure of the fourth aspect, the cooling circuit portion has multiple upstream channel portions, which are continuous with the distribution channel portion extending in the orthogonal direction that is orthogonal to the array direction (hereinafter referred to as orthogonal direction). Thus, in the present embodiment, the coolant can be distributed to the multiple upstream channel portions by one distribution channel portion.

With the battery cooling structure according to a fifth aspect, in the battery cooling structure according to the fourth aspect, the coolant from the cooler side is configured to be supplied to a middle portion of the distribution channel portion in the orthogonal direction.

With the battery cooling structure according to the fifth aspect, the coolant is supplied from the cooler side to the middle portion of the distribution channel portion in the orthogonal direction, whereby the likelihood that the coolant cooled by the cooler will be evenly distributed to the multiple upstream channel portions via the distribution channel portion can be raised.

With the battery cooling structure of a sixth aspect, in the battery cooling structure of any one of the first to fifth aspects, a channel cross-sectional area of the upstream channel portion and a channel cross-sectional area of the downstream channel portions are set to be the same area.

According to the battery cooling structure of the sixth aspect, the channel cross-sectional area of the upstream channel portion and the channel cross-sectional area of each of the downstream channel portions branching off from the upstream channel portion into multiple, are set to be the same area. Accordingly, in the cooling circuit portion, the cross-sectional area on the downstream side where the coolant that has absorbed heat from the battery modules flows is greater than the cross-sectional area on the upstream side where the coolant cooled by the cooler flows. As a result, in this aspect, the flow rate of the coolant from the cooler side flowing upstream of the cooling circuit portion is increased, thereby suppressing the coolant from removing heat from sources other than the battery module, while the flow rate of the coolant flowing downstream of the cooling circuit portion is reduced, whereby the time during which the coolant removes heat from the battery module can be extended.

As described above, the battery cooling structure according to the present disclosure has the excellent effect of being able to suppress temperature differences from occurring among the battery cells that make up the battery module, when the battery module is being cooled.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view schematically illustrating a configuration of a battery to which a battery cooling structure according to an embodiment is applied;
FIG. 2 is a cross-sectional view schematically illustrating the configuration of the battery to which the battery cooling structure according to the embodiment is applied; and
FIG. 3 is a plan view schematically illustrating a configuration of a cooling channel portion in the battery to which the battery cooling structure according to the embodiment is applied.

### DETAILED DESCRIPTION OF EMBODIMENTS

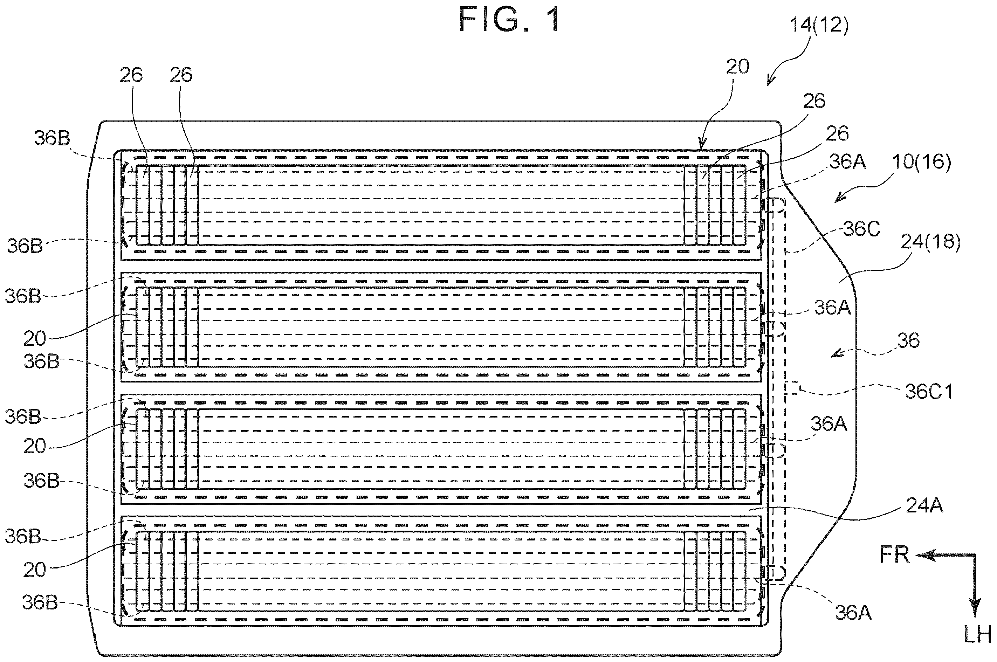

An example of a battery cooling structure according to the present disclosure will be described below with reference to FIGS. 1 to 3. A battery pack 10 to which the battery cooling structure according to an embodiment is applied can be installed in vehicles such as hybrid electric vehicles, plug-in hybrid electric vehicles, battery electric vehicles, and so forth.

First, a schematic configuration of a vehicle 12 in which the battery pack 10 is installed will be described. Note that arrow FR shown in these drawings as appropriate indicates a vehicle forward side, arrow UP indicates a vehicle upper-side, and arrow LH indicates a leftward side in a vehicle width direction.

As illustrated in FIG. 1, a body 14 of the vehicle 12 includes a front part (omitted from illustration) made of die-cast aluminum that makes up a vehicle forward side portion, a center part 16 that makes up a middle portion in the vehicle front-rear direction and that also includes the battery pack 10 and a center frame (omitted from illustration) that is frame-like in plan view and holds the battery pack 10, and a rear part (omitted from illustration) made of die-cast aluminum, that makes up a rear side portion of the vehicle. Note that a power unit (omitted from illustration) including a motor and so forth is installed in the front part, and this power unit is driven by power supplied from the battery pack 10, whereby the vehicle travels.

The battery pack 10 is configured including a battery case 18 that forms an outer shell thereof and a plurality of battery modules 20 accommodated in the battery case 18.

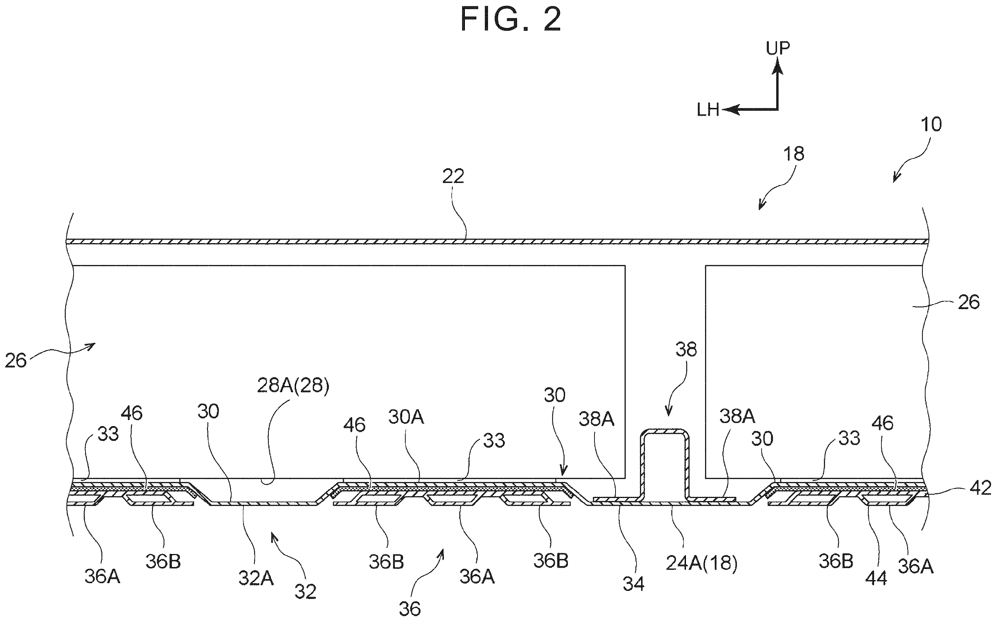

The battery case 18 has main portions made of aluminum alloy, and includes an case upper member 22 that makes up a portion on the vehicle upper-side, and a case lower member 24 that makes up a portion on the vehicle lower-side, as illustrated in FIG. 2.

Inside the battery case 18, on the vehicle upper-side of a bottom wall portion 24A, which serves as a bottom portion of the case lower member 24, a plurality of battery modules 20 is arrayed with longitudinal directions thereof extending in the vehicle front-rear direction and also at predetermined intervals from each other in the vehicle width direction.

Each of the battery modules 20 is configured including a plurality of battery cells 26. Each of the battery cells 26 is configured including a cell case portion 28 that forms an outer shell thereof and also has a flat rectangular cuboid outer shape, and an electrode body (omitted from illustration) that is disposed inside the cell case portion 28.

Also, as viewed from a vehicle height direction, a smoke exhaust portion (omitted from illustration) is provided in a middle portion of a lower wall portions 28A that makes up the vehicle lower-side portion of the cell case portion 28, and this smoke exhaust portion serves as a valve that opens when internal pressure of the battery cell 26 reaches a certain level or higher, externally releasing gas, including smoke, that has accumulated inside the battery cell 26.

The battery cells 26, configured as described above, are arrayed in a row in the vehicle front-rear direction, with thickness directions thereof being the vehicle front-rear direction. That is to say, in the present embodiment, an array direction of the battery cells 26 and the longitudinal direction of the battery module 20 match each other.

On the other hand, the bottom wall portion 24A of the case lower member 24 is configured including a bulging portion 30 protruding toward the vehicle upper-side and also extends in the vehicle front-rear direction, and is used to support the battery cells 26, a smoke exhaust channel portion 32, and an installation wall portion 34.

More specifically, a pair of the bulging portions 30 is disposed at portions on each side of the battery cell 26 in the width direction, on the vehicle lower-side. These bulging portions 30 each include a support wall portion 30A that forms the vehicle upper-side thereof and also of which thickness direction is in the vehicle height direction, so as to support the battery cell 26 from the vehicle lower-side, and has a cross-sectional shape that is U-shaped and is open to the vehicle lower-side, widening from the vehicle upper-side toward the vehicle lower-side, as viewed from the vehicle front-rear direction.

Note that a thermally conductive sheet 33 is interposed between an upper face of the support wall portion 30A and the battery cell 26, and a portion of a cooling circuit portion 36 that is described below is disposed on a lower face of the support wall portion 30A, i.e., part of the bottom wall portion 24A.

The smoke exhaust channel portion 32 has a thickness direction in the vehicle height direction and also includes a bottom portion 32A connecting the bulging portions 30 to each other, and a part of the bulging portions 30, and a cross-sectional shape thereof as viewed from the vehicle front-rear direction is U-shaped, opening to the vehicle upper-side and also widening from the vehicle lower-side toward the vehicle upper-side.

This smoke exhaust channel portion 32 extends in the vehicle front-rear direction and is also disposed so as to overlap with the smoke exhaust portion of the battery cell 26 as viewed in the vehicle height direction, i.e., the height direction of the battery cell 26, enabling gas (exhaust smoke) to flow in from this smoke exhaust portion.

Note that the bottom portion 32A has a through hole (omitted from illustration) formed therein, and this through hole is closed off by a melting sheet (omitted from illustration) that melts at a predetermined temperature. That is to say, in the present embodiment, when gas discharged from the battery cell 26 reaches a predetermined temperature or higher, this melting sheet melts and this gas is discharged to the outside of the battery case 18.

The installation wall portion 34 mutually connects the bulging portions 30 adjacent in the vehicle width direction between the battery modules 20 that are adjacent in the vehicle width direction, and also extends in the vehicle front-rear direction with the thickness direction thereof being the vehicle height direction. A front-rear direction member portion 38 is provided on an upper face of the installation wall portion 34.

A cross-sectional shape of this front-rear direction member portion 38 as viewed from the vehicle front-rear direction is hat-shaped with the vehicle lower-side open, and also a pair of flange portions 38A thereof is joined to the installation wall portion 34 by welding or the like, at joining portions that are omitted from illustration.

Also, cell holding portions (omitted from illustration) having an L-shaped cross-section as viewed from the vehicle front-rear direction are provided on one side and the other side of the front-rear direction member portion 38 in the vehicle width direction, and the battery cells 26 are held in these cell holding portions.

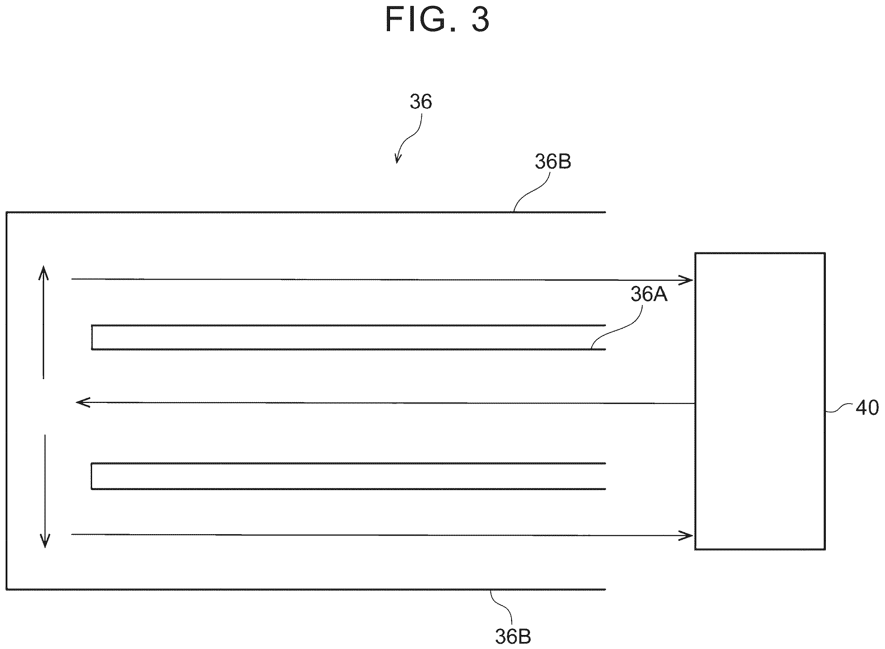

On the other hand, as illustrated in FIGS. 1 and 3, the cooling circuit portion 36 is configured including a plurality of sets of an upstream channel portion 36A and a pair of downstream channel portions 36B, as well as a distribution channel portion 36C that supplies coolant cooled by a cooler 40 to these sets.

In detail, the upstream channel portion 36A extends in the vehicle front-rear direction and is also disposed at the middle portion of the support wall portion 30A of the bulging portion 30 in the vehicle width direction, and branches into the downstream channel portions 36B at the vehicle rear side thereof.

On the other hand, the downstream channel portions 36B extend in the vehicle front-rear direction and are also disposed on one side and the other side of the upstream channel portion 36A in the vehicle width direction. Also, as illustrated in FIG. 2, in the downstream channel portions 36B, as viewed from the vehicle front-rear direction, a cross-sectional shape of one downstream channel portion 36B and the cross-sectional shape of the other downstream channel portion 36B are linearly symmetrical with respect to the upstream channel portion 36A. Further, a cross-sectional area of the upstream channel portion 36A and a cross-sectional area of the downstream channel portions 36B are set to be the same area.

Note that the coolant that has flowed through the downstream channel portions 36B flows to the cooler 40 side via a collection channel portion and a coolant tank that are both omitted from illustration.

As illustrated in FIG. 1, the distribution channel portion 36C extends in the vehicle width direction, and a plurality of (e.g., four) the upstream channel portions 36A is connected at equidistant intervals in the vehicle width direction. Also, a supply port portion 36C1, to which the coolant cooled by the cooler 40 is supplied, is provided at the middle portion of the distribution channel portion 36C in the vehicle width direction.

Also, as illustrated in FIG. 2, the cooling circuit portion 36 is configured by an upper plate 42 that makes up a vehicle upper-side portion of the upstream channel portion 36A and the downstream channel portions 36B and that is also made of pressed steel plate, and a lower plate 44 that makes up a vehicle lower-side portion of the upstream channel portion 36A and the downstream channel portions 36B and that is also made of pressed steel plate, being joining together in a watertight manner by means of joint portions that are omitted from illustration, made by welding or the like.

The cooling circuit portion 36 configured as described above is capable of cooling the battery cells 26 by exchanging heat between the coolant flowing through the upstream channel portion 36A and the downstream channel portions 36B, and the battery cells 26.

Note that a thermally conductive sheet 46 is interposed between a lower face of the support wall portion 30A and an upper face of the cooling circuit portion 36.

### Effects and Advantages of Present Embodiment

Next, the effects and advantages of the present embodiment will be described.

In the present embodiment, as illustrated in FIG. 1, the battery modules 20 in which the battery cells 26 are arrayed are accommodated in the battery case 18, and the cooling circuit portion 36 is disposed along the bottom wall portion 24A of this battery case 18. Accordingly, in the present embodiment, the battery modules 20 can be cooled by causing the coolant to flow through the cooling circuit portion 36.

However, depending on the configuration of the cooling circuit portion 36, it is conceivable that evenly cooling the battery modules 20 may be difficult, and temperature differences may occur among the battery cells 26 that make up the battery modules 20.

Now, in the present embodiment, as illustrated in FIG. 3, the cooling circuit portion 36 extends in the vehicle front-rear direction, and also includes the upstream channel portion 36A through which the coolant from the cooler 40 side that cools the coolant flows in the vehicle front-rear direction of the vehicle, and the downstream channel portions 36B that branch off from the upstream channel portion 36A into multiple channels that extend in the vehicle front-rear direction and also through which the coolant flows toward the cooler 40 side in the vehicle front-rear direction.

Accordingly, in the present embodiment, the speed at which the coolant cooled by the cooler 40 is dispersed in the vehicle front-rear direction is increased as compared to a configuration in which the coolant is moved back and forth through one channel each for the outbound path for the inbound path, thereby increasing the likelihood that the battery cells 26 making up the battery module 20 will be evenly cooled.

Also, in the present embodiment, the downstream channel portions 36B are disposed one on one side of the upstream channel portion 36A and one on the other side thereof, in the vehicle width direction. Accordingly, in the present embodiment, flow rates of the coolant flowing through the downstream channel portions 36B can be made to be flow rates that are approximately the same.

Also, in the present embodiment, as illustrated in FIG. 2, the upstream channel portion 36A and the downstream channel portions 36B are formed by joining pressed steel plates. The downstream channel portions 36B are shaped symmetrically with respect to the upstream channel portion 36A.

Therefore, in the present embodiment, the shape of the press mold used to mold the downstream channel portion 36B can be used in common, and the likelihood that the coolant flowing from the upstream channel portion 36A will be evenly distributed to one downstream channel portion 36B and the other downstream channel portion 36B can be increased.

Returning to FIG. 1, in the present embodiment, the cooling circuit portion 36 includes multiple upstream channel portions 36A, which are continuous with the distribution channel portion 36C extending in the vehicle width direction. Thus, in the present embodiment, the coolant can be distributed to the multiple upstream channel portions 36A by one distribution channel portion 36C.

Also, in the present embodiment, the coolant is supplied from the cooler 40 side to the vehicle width direction middle portion of the distribution channel portion 36C, whereby the likelihood that the coolant cooled by the cooler 40 will be evenly distributed to the multiple upstream channel portions 36A via the distribution channel portion 36C can be raised.

In addition, in the present embodiment, as illustrated in FIG. 2, the channel cross-sectional area of the upstream channel portion 36A and the channel cross-sectional areas of each of the downstream channel portions 36B branching off from the upstream channel portion 36A are set to be the same area. Accordingly, in the cooling circuit portion 36, the cross-sectional area on the downstream side where the coolant that has absorbed heat from the battery modules 20 flows is greater than the cross-sectional area on the upstream side where the coolant cooled by the cooler 40 flows.

As a result, in the present embodiment, the flow rate of the coolant from the cooler 40 side flowing upstream of the cooling circuit portion 36 is increased, thereby suppressing the coolant from removing heat from sources other than the battery modules 20, while the flow rate of this coolant flowing downstream of the cooling circuit portion 36 is reduced, whereby the time during which the coolant removes heat from the battery modules 20 can be extended.

As described above, in the present embodiment, when the battery modules 20 are cooled, temperature differences among the battery cells 26 that make up the battery modules 20 can be suppressed from occurring.

### Supplementary Description of Above Embodiment

In the above-described embodiment, the array direction of the battery cells 26 has been described as being the vehicle front-rear direction, but depending on the specifications and so forth of the battery pack 10, the array direction of the battery cells 26 may be set to a direction other than the vehicle front-rear direction, such as the vehicle width direction, or the like.

## Claims

1. A battery cooling structure comprising:
a battery case (18) for accommodating a battery module (20) in which a plurality of battery cells (26) is arrayed; and
a cooling circuit portion (36) that is disposed along a bottom portion of the battery case (18), and that is also configured to cool the battery module (20), wherein
the cooling circuit portion (36) includes
an upstream channel portion (36A) that extends in an array direction of the battery cells (26), and that is also configured to cause coolant flowing through the cooling circuit portion (36) from a cooler side that cools the coolant, to flow along the array direction, and
a plurality of downstream channel portions (36B) that branch off from the upstream channel portion (36A), extend in the array direction, and is also configured to cause the coolant to flow toward the cooler side along the array direction.

2. The battery cooling structure according to claim 1, wherein one each of the downstream channel portions (36B) is disposed on one side in an orthogonal direction that is orthogonal to the array direction, of the upstream channel portion, and on another side.

3. The battery cooling structure according to claim 2, wherein the upstream channel portion (36A) and the downstream channel portions (36B) are fashioned by joining pressed steel plates, and also a shape of a pair of the downstream channel portions (36B) is line-symmetrical with respect to the upstream channel portion (36A).

4. The battery cooling structure according to any one of claims 1 to 3, further comprising a distribution channel portion (36C) that is continuous with a plurality of the upstream channel portions (36A) and also extends in a direction orthogonal to the array direction.

5. The battery cooling structure according to claim 4, configured so that the coolant from the cooler side is supplied to a middle portion of the distribution channel portion (36C) in the orthogonal direction.

6. The battery cooling structure according to any one of claims 1 to 5, wherein a channel cross-sectional area of the upstream channel portion (36A) and a channel cross-sectional area of the downstream channel portions (36B) are set to be the same area.
